(19)

Europäisches Patentamt

European Patent Office

Office européen des brevets

(11) **EP 4 386 626 A1**

(12) **EUROPEAN PATENT APPLICATION**

(43) Date of publication:
**19.06.2024 Bulletin 2024/25**

(21) Application number: **22213531.1**

(22) Date of filing: **14.12.2022**

(51) International Patent Classification (IPC):
***G06N 3/0455*** *(2023.01)*     ***G06N 3/0464*** *(2023.01)*
***G06N 3/0475*** *(2023.01)*

(52) Cooperative Patent Classification (CPC):
**G06N 3/0464; G06N 3/0455; G06N 3/0475;**
G06N 3/092; G06N 3/094

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Leica Microsystems CMS GmbH
35578 Wetzlar (DE)**

(72) Inventor: **KAPPEL, Constantin
35578 Wetzlar (DE)**

(74) Representative: **2SPL Patentanwälte PartG mbB
Landaubogen 3
81373 München (DE)**

(54) **METHODS, SYSTEMS, AND COMPUTER SYSTEMS FOR TRAINING A MACHINE-LEARNING MODEL, GENERATING A TRAINING CORPUS, AND USING A MACHINE-LEARNING MODEL FOR USE IN A  SCIENTIFIC OR SURGICAL IMAGING SYSTEM**

(57)     Examples relate to methods, systems, and computer systems for training a machine-learning model, for generating a training corpus, and for using a machine-learning model for use in a scientific or surgical imaging system, and to a scientific or surgical imaging system comprising such a system. A method for training a machine-learning model for use in a scientific or surgical imaging system comprises obtaining (210) a plurality of images of a scientific or surgical imaging system, for use as training input images. The method comprises obtaining (220) a plurality of training outputs that are based on the plurality of training input images and that are based on an image processing workflow of the scientific or surgical imaging system, the image processing workflow comprising a plurality of image processing steps. The method comprises training (240) the machine-learning model using the plurality of training input images and the plurality of training outputs.

Fig. 2a

EP 4 386 626 A1

## Description

## Technical field

Examples relate to methods, systems, and computer systems for training a machine-learning model, for generating a training corpus, and for using a machine-learning model for use in a scientific or surgical imaging system, and to a scientific or surgical imaging system comprising such a system.

## Background

Modern scientific or surgical imaging devices, such as microscopes, exoscopes, endoscopes etc. often perform image processing on the images taken by the respective sensor or sensors used within the scientific or surgical imaging devices. Such image processing may range from tasks that are commonly applied to different types of images, such as de-noising or contrast adjustment, to very specialized tasks, such as the creation of pseudocolor overlays from fluorescence images, highlighting of geometrical or anatomical features etc. For this purpose, different image processing tasks may be performed by computer systems that are either integrated in the respective imaging device or coupled with it. In many cases, these image processing tasks are grouped together into so-called image processing workflows comprising multiple image processing steps that are executed subsequently, i.e., step n uses the output of preceding step n - 1. The more image processing steps are performed on the images captured by the imaging device, the higher the computational load becomes, and the higher is the latency of the image processing workflow.

There may be a desire for an improved concept for processing images generated by a scientific or surgical imaging device, preferably in real time.

## Summary

This desire is addressed by the subject-matter of the independent claims.

Various examples of the present disclosure are based on the finding, that complex image processing workflows, which can include a multitude of sequential image processing steps, can be simplified, and made more efficient by training a machine-learning model, such as a deep neural network, to do the image processing tasks performed by the image processing workflow in an integrated manner, i.e., without requiring the intermediate outputs generated by the different image processing steps. In effect, instead of performing a sequence of image processing steps, a single, machine-learning based processing step is used, replacing the entire image processing workflow. This may both reduce the computational complexity required for processing the images and reduce the delay introduced by the sequential nature of the workflow being replaced.

While various compression techniques are known with respect to deep neural networks, such as Knowledge Distillation, which is a technique that works by training a smaller deep neural network (DNN) using the output of a larger DNN or an ensemble of DNNs, or Transfer Learning, which refers to the technique of re-training or fine-tuning of only few layers of a DNN, which has been trained on a large corpus of data previously and is now refined or repurposed using a smaller training set from the same or different domain as the original corpus, these techniques are generally only applied to DNNs, and not to workflows comprising a sequence of image processing steps.

Some aspects of the present disclosure relate to a method for training a machine-learning model for use in a scientific or surgical imaging system. The method comprises obtaining a plurality of images of a scientific or surgical imaging system, for use as training input images. The method comprises obtaining a plurality of training outputs that are based on the plurality of training input images and that are based on an image processing workflow of the scientific or surgical imaging system. The image processing workflow comprises a plurality of image processing steps. The method comprises training the machine-learning model using the plurality of training input images and the plurality of training outputs. By training the machine-learning model, the image processing workflow can eventually be replaced by the trained machine-learning model, resulting in the reduced complexity and lower latency.

In some cases, the image processing workflow can be parametrized, to control various aspects of the image processing steps of the image processing workflow. For example, these parameters may control aspects such as colors used for an overlay, thresholds used in object detection, sizes of bounding boxes etc. To support the same types of parametrization when using the machine-learning model, such parameter(s) may also be used as input parameters of the machine-learning model, and thus also be used during training of the machine-learning model. For example, the method may comprise obtaining one or more input parameters of the image processing workflow as further training input and training the machine-learning model using the one or more input parameters as further training input. This may allow the same or similar parametrization of the machine-learning model when the machine-learning model is used to replace the image processing workflow from which it is derived.

In general, such input parameters may be used, by a knowledgeable user, to tailor the workflow to the requirements of the application at hand. In some cases, however, the input parameters chosen may be less than ideal, such that the performance of the image processing workflow can be improved by adjusting the input parameters. As the input parameters are usually user-defined, the burden of finding suitable input parameters may initially rest with the user. However, when suitable and quantifiable quality criteria can be defined, this task can be performed automatically as part of the training process as well. For example, the method may comprise evaluating an output of the machine-learning model according to a quality criterion. The method may comprise providing a feedback signal for adapting one or more parameters of the image processing workflow based on the evaluation of the output of the machine-learning model. This way, the performance of the image processing workflow may be improved during, or rather as part of, the training, resulting in improved training outputs, and consequently also a trained machine-learning model with an improved quality.

In the above example, the output of the machine-learning model is evaluated according to the quality criterion, i.e., the generation of the feedback signal is performed by an algorithm that is separate from the machine-learning model. Alternatively, however, the machine-learning model may not only be trained to generate the output, but also to generate the feedback signal. In other words, the machine-learning model may be trained to generate a feedback signal for adapting one or more parameters of the image processing workflow. This may avoid the need for a separate algorithm for generating the feedback signal. However, an additional loss function, and additional computational effort for training the machine-learning model to generate the feedback signal may be required.

There are different training techniques that are suitable for training such a machine-learning model. For example, the machine-learning model may be trained, using supervised learning, to transform an image of the scientific or surgical imaging system into an output, by applying the plurality of training input images at an input of the machine-learning model and using the plurality of training outputs as desired output during training of the machine-learning model. When supervised learning is used, the training input and output data is the main factor regarding the quality of the training, while a commonly-used loss function, such as gradient descent, can be used.

Another suitable technique is reinforcement learning. In other words, the machine-learning model may be trained, using reinforcement learning, to transform an image of the scientific or surgical imaging system into an output. In this case, a difference between the output of the machine-learning model during training and a training output of the plurality of training outputs may be used to determine a reward during the reinforcement learning-based training. This may make defining the reward function more complex. However, reinforcement learning may be better suitable if the feedback signal is to be generated by the machine-learning model in addition to the output, as there is no labelled data (i.e., desired output) regarding the feedback signal (as required for supervised learning).

A third type of training is based on two agents that work against each other - a generator model that does the transformation of the image into the output, and a discriminator model, which evaluates the quality of the output. In other words, the machine-learning model may be trained, as generator model of a pair of generative adversarial networks to transform an image of the scientific or surgical imaging system into an output. The discriminator model of the pair of generative adversarial networks may be trained based on the plurality of training outputs. Similar to reinforcement learning, this approach may better suitable if the feedback signal is to be generated by the machine-learning model in addition to the output, as there is no labelled data (i.e., desired output) regarding the feedback signal.

In the proposed concept, the machine-learning model is trained to transform an image into an output. In this context, there are various types of suitable outputs, such as a processed image or information about the input image (e.g., position(s) of object(s), or text describing the image, or a vector representing the image or comprising various types of information about the image), or temporal coordinates (if the machine-learning model is used to process a stream of images (i.e., a video)). Accordingly, the machine-learning model may be trained to output, based on an image of a scientific or surgical imaging system, at least one of an image, a vector, spatial coordinates, and temporal coordinates.

In addition to the training, the generation of the training data, and the use of the trained machine-learning model, are two further aspects of the present disclosure.

Various aspects of the present disclosure relate to a method for a scientific or surgical imaging system. The method comprises generating a plurality of images based on imaging sensor data of an optical imaging sensor of the scientific or surgical imaging system. The method further comprises generating, using an image processing workflow of the scientific or surgical imaging system, a plurality of outputs based on the plurality of images, the image processing workflow comprising a plurality of image processing steps. The method comprises providing the plurality of images as training input images and the plurality of outputs as training outputs for training a machine-learning model, e.g., according to the above-described training. By generating the images, and processing them using the image processing workflow, suitable training data for training the machine-learning model can be generated.

Once the machine-learning model is trained, it can be used to replace the image processing workflow. Accordingly, the method may comprise obtaining the trained machine-learning model. The method may comprise replacing the image processing workflow with the machine-learning model that is trained according to the above-described training method. This may subsequently reduce the computational effort required for processing the images, and also reduce the latency of the image processing.

The proposed compression of the image processing workflow is not only applicable to single, isolated image processing workflows, but can also be used in a hierarchical manner. In other words, the image processing workflow being processed may be part of a second, larger image processing workflow. On this second image processing workflow, the same technique may be applied. For example, the image processing workflow may be part of a second image processing workflow. The method may comprise, after replacing the image processing workflow with the machine-learning model, generating, using the second image processing workflow, a second plurality of outputs based on a second plurality of images and providing the second plurality of images as training input images and the second plurality of outputs as training outputs for training a second machine-learning model, e.g., according to the above-described training method.

While the training of the machine-learning model is primarily described as a separate (training) method, the two methods may likewise be combined into one. For example, the method may further comprise training the machine-learning model using the above-described training method.

In some cases, the generation of the training data, and the corresponding training may be performed in the same system (being part of the scientific or surgical imaging system), e.g., the training may be performed during downtime of the scientific or surgical imaging system. In other words, generating the plurality of images and the plurality of outputs and training the machine-learning model may be performed by a system of the scientific or surgical imaging system. This may enable an automated replacement of the image processing workflow on-premise, without involving another entity.

Alternatively, the generation of the training data and training of the machine-learning model may be performed by different entities. In other words, generating the plurality of images and the plurality of outputs may be performed by a system of the scientific or surgical imaging system. The training of the machine-learning model may be performed by a separate computer system. This may enable use of the concept with systems with limited processing power, as the training of the machine-learning model is a computationally expensive task that requires a large amount of (graphics) memory.

As outlined in connection with the training method, a feedback path may be established between the training method and the generation of the training data. For example, the method may comprise obtaining a feedback signal. The feedback signal may be based on the training of the machine-learning model or based on an output of the trained machine-learning model when the machine-learning model is used by the surgical or scientific imaging system. The method may comprise using the feedback signal as input to the image processing workflow or to the trained machine-learning model. For example, using the feedback signal may comprise adapting one or more parameters of one or more image processing steps. This may improve the quality of the image processing workflow, and result in better training images.

When the feedback signal is applied to the image processing workflow during generation of the training data, the outputs may be re-generated after the feedback signal is applied. In other words, the method may comprise regenerating, using the adapted image processing workflow, the plurality of outputs, and providing the regenerated outputs as training outputs for training the machine-learning model. Thus, improved training outputs may be generated and used for training the machine-learning model.

In the previous examples, the input parameters were set according to the feedback signal. However, at least initially, these input parameters may be user-defined. Information on the input parameters may be further used as additional training inputs during the training of the machine-learning model. In other words, the image processing workflow may be executed based on one or more input parameters. The method may comprise providing the one or more input parameters as further training input for training the machine-learning model. This may enable the training of a parametrizable machine-learning model, to replace a parametrizable workflow.

As outlined above, there are various types of suitable outputs, such as a processed image or information about the input image (e.g., position(s) of object(s), or text describing the image, or a vector representing the image or comprising various types of information about the image), or temporal coordinates (if the machine-learning model is used to process a stream of images (i.e., a video)). Accordingly, the plurality of outputs may each comprise at least one of an image, a vector, spatial coordinates, and temporal coordinates.

The proposed concept is particularly useful when dealing with complex image processing workflows with a multitude of steps that are to be executed sequentially. Accordingly, the image processing workflow may comprise a plurality of image processing steps that are executed sequentially. In such cases, the benefit of replacing the workflow with a single machine-learning model may be the largest, both with respect to the computational effort for processing the images and also with respect to the latency being incurred.

There are various types of processing steps that can be part of the image processing workflow. For example, the image processing workflow may comprise at least one of one or more deterministic image processing steps, one or more image processing steps with an iterative optimization component, and one or more machine-learning-based image processing steps. In particular, image processing steps with an iterative optimization component (i.e., image processing steps that are repeated multiple times to further improve the quality) and machine-learning based image processing steps may profit from being compressed according to the proposed concept. Moreover, the image processing pipeline may comprise image processing steps that transform the image, and image processing steps that analyze the image. In other words, the plurality of image processing steps may comprise at least one of one or more image transformation steps and one or more image analysis steps.

Both of the above methods may be performed by a computer system, e.g., by the same computer system, or by different computers systems. An aspect of the present disclosure relates to a system, such as a computer system, for a scientific or surgical imaging system. The system comprises one or more processors and one or more storage devices. For example, the system may be configured to perform at least one of the above methods.

Another aspect relates to a system that merely uses the trained machine-learning model (without generating the training data). In other words, an aspect of the present disclosure relate to a system for a scientific or surgical imaging system The system comprises one or more processors and one or more storage devices. The system is configured to obtain an image based on imaging sensor data of an optical imaging sensor of the scientific or surgical imaging system. The system is configured to process the image using a machine-learning model that is trained according to the above-described training method. The system is configured to use an output of the machine-learning model.

Such a system may be a system with a reduced processing power, such as an embedded system or a mobile device. For example, the system may be an embedded system for use as part of the scientific or surgical imaging system. Alternatively, the system may be a mobile device that may be suitable for being coupled with the scientific or surgical imaging system. Without compression of the image-processing workflow to a machine-learning model, such systems may be unsuitable for processing the image, at least with a tolerable latency/delay.

Another aspect of the present disclosure relates to a scientific or surgical imaging system, which may be a microscope system, comprising the at least one of the above systems. This may enable the scientific or surgical imaging system to use the trained machine-learning model, to generate suitable training data, and/or to train the machine-learning model.

Another aspect of the present disclosure relates to a computer program with a program code for performing at least one of the above methods when the computer program is run on a processor.

### Short description of the Figures

Some examples of apparatuses and/or methods will be described in the following by way of example only, and with reference to the accompanying figures, in which

Figs. 1a and 1b  show flow charts of examples of a method for a scientific or surgical imaging system;

Figs. 2a and 2b  show flow charts of example of a method for training a machine-learning model;

Fig. 3  shows a schematic diagram of an example of a system for a scientific or surgical imaging system, and of a scientific or surgical imaging system comprising such a system;

Fig. 4  shows a schematic overview of an example of an image analysis workflow;

Fig. 5  shows a schematic overview of an example of a workflow for training a deep neural network;

Fig. 6  shows a schematic overview of an example of a workflow for compressing an image analysis workflow; and

Fig. 7  shows a schematic diagram of a system comprising an imaging device and a computer system;

### Detailed Description

Various examples will now be described more fully with reference to the accompanying drawings in which some examples are illustrated. In the figures, the thicknesses of lines, layers and/or regions may be exaggerated for clarity.

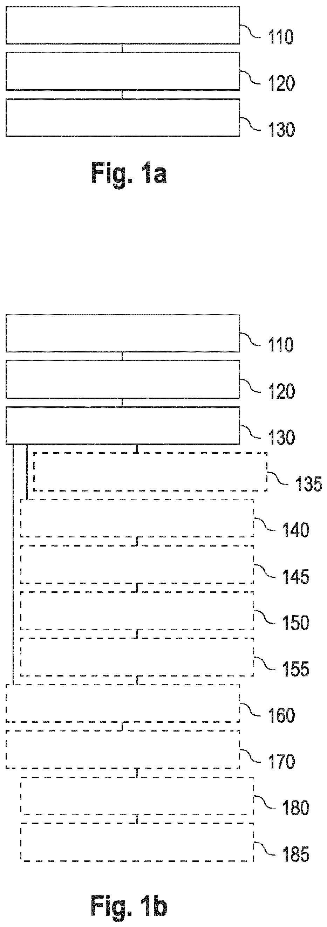

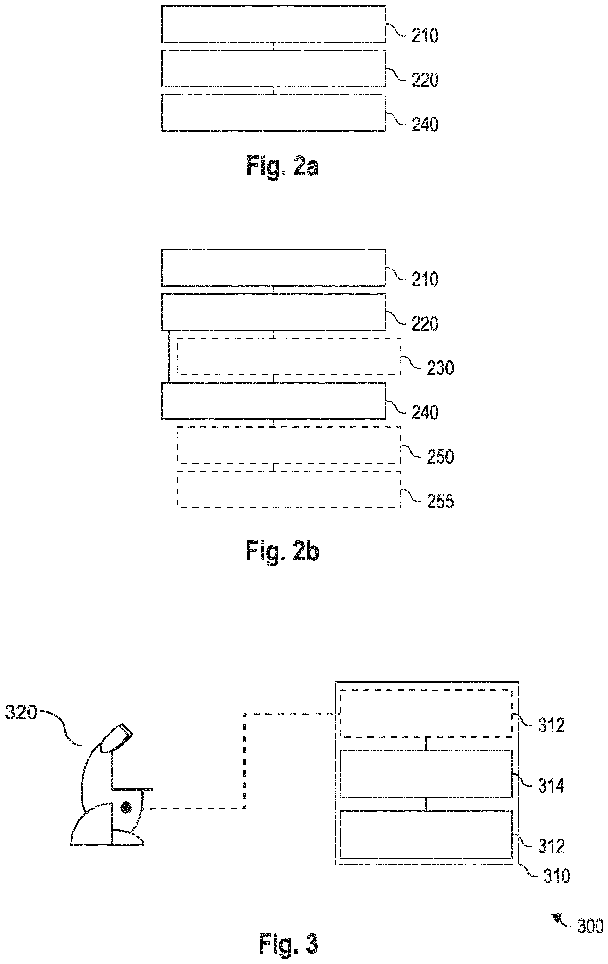

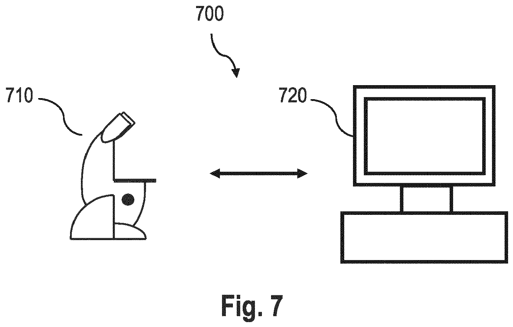

Figs. 1a and 1b show flow charts of examples of a method for a scientific or surgical imaging system, such as for a scientific or surgical imaging system 300 shown in Fig. 3. The method comprises generating 110 a plurality of images based on imaging sensor data of an optical imaging sensor of the scientific or surgical imaging system. The method comprises generating 120, using an image processing workflow of the scientific or surgical imaging system, a plurality of outputs based on the plurality of images. The image processing workflow comprises a plurality of image processing steps. The method comprises providing 130 the plurality of images as training input images and the plurality of outputs as training outputs for training a machine-learning model, e.g., using the method introduced in connection with Figs. 2a and/or 2b. Optionally, the method comprises obtaining 160 the trained machine-learning model. For example, the method may be performed by a (computer) system, e.g., the system 310 or the computer system 720 introduced in connection with Figs. 3 and 7, respectively.

As outlined above, the proposed concept is based on the finding, that complex image processing workflows, which can include a multitude of sequential image processing steps, can be simplified and more efficient by training a machine-learning model, such as a deep neural network, to do the image processing tasks performed by the image processing workflow in an integrated manner, i.e., without requiring the intermediate outputs generated by the different image processing steps. To train such a machine-learning model, two tasks are to be performed - building a training corpus, and the actual training of the machine-learning model. In connection with Figs. 1a and/or 1b, the former is discussed, while the latter is discussed in connection with Figs. 2a and/or 2b. These tasks, and respective methods, may be performed by separate entities, or by the same entity.

The method of Figs. 1a and/or 1b primarily relates to the generation of the training corpus, i.e., the collection of suitable training data for training the machine-learning model. As a secondary aspect, the use of the machine-learning model is discussed. For the purpose of generating the training corpus, the method of Figs. 1a and/or 1b employs the facilities of the scientific or surgical imaging system at hand.

In the proposed concept, the term "scientific or surgical imaging system" is used to highlight the capabilities of the imaging system at hand. For example, such a scientific or surgical imaging system may be a centered around a scientific or surgical imaging device, such as a microscope (e.g., a surgical microscope, a material science microscope, a laboratory microscope etc.), an endoscope or an exoscope (also sometimes called an extracorporeal telescope). Exoscopes are camera-based imaging systems, and in particular camera-based 3D imaging systems, which are suitable for providing images of surgical sites with high magnification and a large depth of field. Compared to microscopes, which may be used via oculars, exoscopes are only used via display modalities, such as monitor or a head-mounted display.

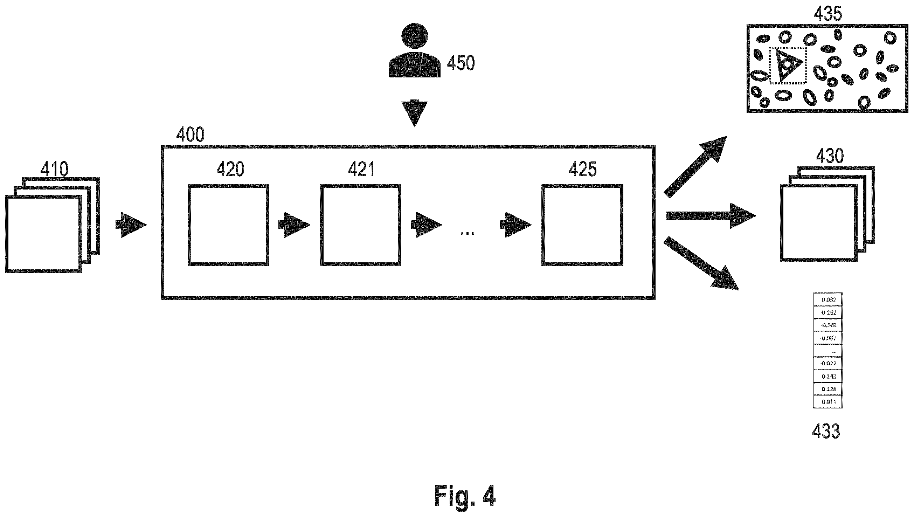

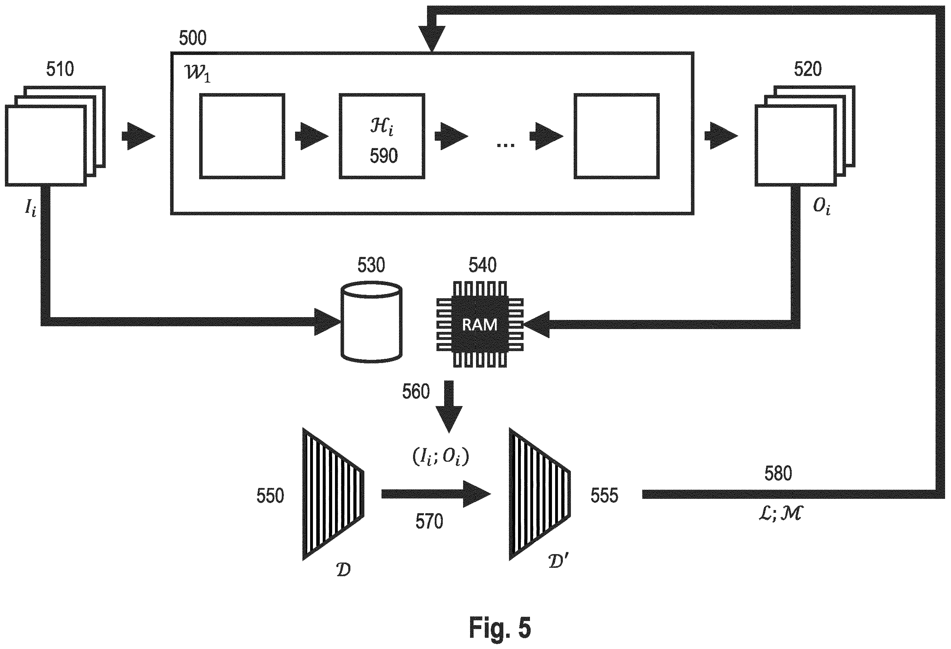

In addition to the respective imaging device, the scientific or surgical imaging system comprises one or more additional components. In particular, the scientific or surgical imaging system may further comprise a (computer) system, which may be coupled (temporarily or permanently) with the respective imaging device. Such a system may be used, on the one hand, to control various aspects of the scientific or surgical imaging system, such as an illumination system of the scientific or surgical imaging system. On the other hand, such a system may be used to process the imaging sensor data of an optical imaging sensor of the respective imaging device. The latter capability is the basis for the generation of the training input images. As outlined above, the method comprises generating 110 the plurality of images (e.g., shown in Figs. 4 and 5 as 410, 510, respectively) based on the imaging sensor data of the optical imaging sensor of the scientific or surgical imaging system. For example, raw imaging sensor data may be obtained from the optical imaging sensor of the scientific or surgical imaging system (e.g., via an interface of the system), and processed to generate the plurality of images. Alternatively, the raw imaging sensor data may be used as plurality of images, or the plurality of images may be obtained directly from the optical imaging sensor (via the interface of the system). For example, the images may be two-dimensional to n-dimensional images, with the additional dimensions (exceeding two) being one or more of a depth dimension, a time dimension, or different channels. Optionally, some level of pre-processing, such as debayering, denoising or generating a multi-spectral image from the raw imaging sensor data may be performed before the respective training images are input into the image processing workflow. The resulting images may be used as training input images for the training of the machine-learning model.

Apart from the training input images, corresponding training outputs are generated (430-435 in Fig. 4, 520 in Fig. 5). These training outputs are used for the training, e.g., as desired outputs when supervised learning is used, to determine a reward when reinforcement learning is used, or to train a discriminator when a generative adversarial network is used. In the proposed concept, these training outputs are generated by the image processing workflow, which is to be replaced by the trained machine-learning model. In the following, a brief introduction is given on such image processing workflows.

Modern scientific or surgical imaging systems, such a lab microscopes or surgical microscopes, often provide functionality that goes beyond providing a magnified view of a sample. In addition to the magnified view, the images generated based on the imaging sensor data of the imaging sensor of the respective imaging device are processed and augmented to provide an augmented view of the sample. For this purpose, a sequence of image processing steps is executed on the images, with a subsequent step (e.g., step n) being applied on the respective preceding step (e.g., step $n-1$). An illustration of this process is given in Figs. 4 and 5. In Figs. 4 and 5, input images $I_i$ 410, 510 are input into an image processing workflow

$$\mathcal{W}_1$$

400, 500 comprising a sequence of image processing steps 420-425. The workflow

$$\mathcal{W}_1$$

then outputs, e.g., for each image $I_i$, an output $O_i$. As shown in Fig. 4, different types of outputs may be provided (e.g., several different at once, or one of them), such an image 430, a vector 433 or coordinates 435. Accordingly, the plurality of outputs may each comprise at least one of an image 430, a vector 433 (comprising information on the image, such as an embedding of the image), spatial coordinates 435 (e.g., coordinates of a bounding box or polygon, or coordinates of a central point), and temporal coordinates (e.g., a timestamp).

Within the image processing workflow, an arbitrary sequence of image processing steps are used. In particular, the image processing workflow comprises a plurality of image processing steps that are executed sequentially, i.e., at least two image processing steps, with the second image processing step being applied (at least) based on the result of the first image processing steps. To give an example - the image processing workflow may comprise one or several general-purpose image processing steps, such as debayering, denoising, sharpening, contrast adjustment etc. In addition, or alternatively, some application-specific image processing steps may be applied. For example, when fluorescence imaging is performed (in a lab microscope, surgical microscope, surgical endoscope or surgical exoscope setting), the fluorescence emissions may be detected in the image (in a first image processing step), used to generate a pseudo-color overlay (in a subsequent second image processing step), and overlaid over the image (in a subsequent third image processing step). Alternatively, image segmentation and/or object detection may be used to detect one or more regions of interest within the image (in a first or first and second image processing step), with different types of image transformation being performed on different portions of the image depending on an extent of the image segmentation/object detection (in a subsequent third and/or fourth image processing step). Accordingly, the plurality of image processing steps may comprise at least one of one or more image transformation steps and one or more image analysis steps (e.g., the object detection/image segmentation).

Such image processing steps may be implemented using different techniques - for example, denoising may be performed using a (one-pass) deterministic filter (e.g., removing outliers based on the content of adjacent pixels of the same color/channel), using an iterative and deterministic filter (i.e., multi-pass) deterministic filter (e.g., gradually reducing differences based on the content of adjacent pixels), using a (one-pass) machine-learning-based filter (e.g., passing the image once through a machine-learning model being trained to reduce noise) or using an iterative (multi-pass) machine-learning-based filter (e.g., based on a generative adversarial network or based on reinforcement learning). In other words, the image processing workflow may comprise at least one of one or more (one-pass or iterative/multi-pass) deterministic image processing steps, one or more (deterministic or machine-learning based) image processing steps with an iterative optimization component, and one or more machine-learning-based (one-pass or iterative/multi-pass) image processing steps. Of these filters, in particular the iterative (i.e., multi-pass) filters tend to be computationally expensive and nondeterministic with regards to runtime, which is undesirable in an image processing workflow, which may be an image processing workflow for live-processing of images or imaging sensor data of the optical imaging sensor (e.g., for generating a live image on a display, digital oculars or a head-mounted display of the imaging system).

In the proposed concept, the image processing workflow is applied to generate 120 the plurality of outputs (e.g., one or more outputs for each of the images) from the plurality of images, for use as training outputs for training the machine-learning model.

Once the plurality of images and the plurality of outputs are obtained, they are provided 130 as training input images and training outputs for training the machine-learning model. For example, the training input images and training outputs may be stored in a storage device (316 in Fig. 3) of the system, for use in the subsequent training by the system, or they may be provided to a separate system (e.g., to a cloud server), e.g., via the interface of the system or via a removable storage (e.g., a flash drive).

In some cases, as further shown in Fig. 4, the image processing workflow can be (manually) adapted to the specific application at hand (by user 450 in Fig. 4), by parametrizing the image processing workflow. For example, the image processing workflow may be executed based on one or more input parameters. Such input parameters may include one or more numerical parameters, such as a numerical parameter controlling the severity of the denoising or a numerical parameter controlling the color of the pseudo-color overlay, and/or one or more enumerated parameters, such as a choice among two or more spectral wavelength bands to show, hide or highlight, a choice among two or more two or more types of objects to be detected by the object detection etc. These input parameters can fundamentally affect the output of the image processing workflow. To train a machine-learning model to take these input parameters into account, the one or more input parameters may be used as further training inputs during training of the machine-learning model (resulting in a corresponding training output). Accordingly, as further shown in Fig. 1b, the method may comprise providing 135 the one or more input parameters as further training input for training the machine-learning model.

In the above section, the selection of the one or more input parameters was described as a manual process. However, in some examples of the present disclosure, these one or more input parameters may be tuned during generation of the training corpus. In this case, as described in more detail in connection with Figs. 2 and 5, during training of the machine-learning model, a feedback signal can be generated that is to be used to adapt the one or ore more input parameters. Accordingly, as further shown in Fig. 1b, the method may comprise obtaining 140 the feedback signal (580 in Fig. 5). This feedback signal can be produced during training of the machine-learning model, or even during "normal" operation of the imaging system (when a trained machine-learning model is used alongside the image processing workflow or instead of the image processing workflow). For example, as outlined in more detail in connection with Figs. 2 and 5, the feedback signal may be based on the training of the machine-learning model or based on an output of the trained machine-learning model when the machine-learning model is used by the surgical or scientific imaging system. This feedback signal may then be used 145 as input to the image processing workflow, e.g., to adapt the one or more input parameters. In particular, using the feedback signal may comprise adapting one or more (numerical or enumerated) parameters of one or more image processing steps of the image processing workflow. Once the parameters are adjusted, the training outputs may be generated again, so the training of the machine-learning model can proceed, or be restarted with, training outputs that are based on improved parameters. Accordingly, as further shown in Fig. 1b, the method may comprise regenerating 150, using the adapted image processing workflow, the plurality of outputs, and providing 155 the regenerated outputs as training outputs for training the machine-learning model. These training outputs may extend or supplant the previously-submitted training outputs. As they are based on the same training input images, the training input images might not be provided again.

The generated training corpus, i.e., the training input images, optional further training input and training outputs can then be used to train the machine-learning model. In many cases, this may be done using a different computer system, e.g., a cloud-based computer system, than the system being part of, or coupled with, the scientific or surgical imaging system. In other words, generating the plurality of images and the plurality of outputs may be performed by the system of the scientific or surgical imaging system, and the training of the machine-learning model may be performed by a separate computer system, such as a cloud-based computer system. Alternatively, both the generation of the training corpus and the training of the machine-learning model may be performed locally by the system of the scientific or surgical image processing system. In other words, generating the plurality of images and the plurality of outputs and training the machine-learning model may be performed by the system of the scientific or surgical imaging system. Consequently, the method, which may be performed by said system, may further comprising training the machine-learning model, e.g., using the method introduced in connection with Figs. 2a and/or 2b.

As outlined above, one aim of the proposed concept is to provide an improved concept for processing images generated by a scientific or surgical imaging device, preferably in real time. This concept may not only include the training of the machine-learning model, but also the use of the machine-learning model instead of the image-processing workflow. Accordingly, as further shown in Fig. 1b, the method may comprise obtaining 160 the trained machine-learning model, i.e., the machine-learning model that is trained using the training input images (and further training input) and the training outputs generated by the scientific or surgical imaging system. Once the trained machine-learning model has been obtained, it may be used instead of the image processing workflow. Accordingly, as further shown in Fig. 1b, the method may comprise replacing 170 the image processing workflow with the machine-learning model that is according to the method of Figs. 2a and/or 2b.

In some examples, the aforementioned feedback signal can be generated locally at the scientific or surgical imaging system, by employing the (trained) machine-learning model. In some cases, this locally-generated feedback signal may be used as local feedback signal for the image processing workflow. Alternatively, it may be used as local feedback signal for the trained machine-learning model itself. Accordingly, the feedback signal may then be used 145 as input to the trained machine-learning model. In this case, depending on how the feedback signal is generated (which is detailed in connection with Figs. 2a-2b, 5), a suitable loss function may be used, or regularization may be applied, to avoid the feedback loop drifting into an undesirable portion of the parameter space.

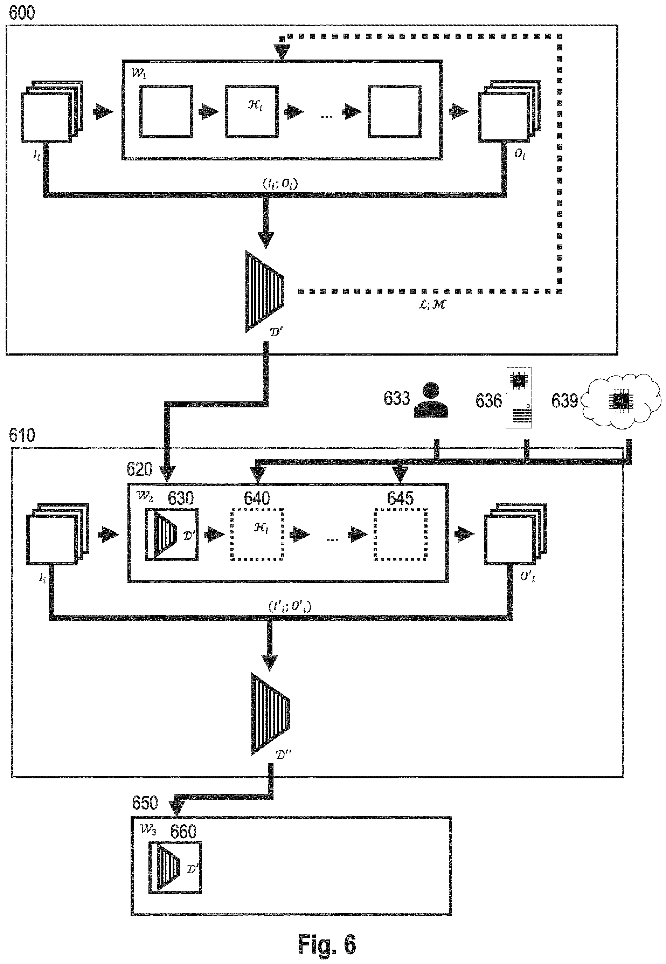

In the previous examples, reference was made to a single image processing workflow. However, the concept may be applied to nested image processing workflows as well. For example, as illustrated in connection with Fig. 6, after a first image processing workflow is "compressed" to a trained machine-learning model according to the proposed concept, the same concept may be applied again to a second image processing workflow that includes said first image processing workflow being replaced by the trained machine-learning model. For example, the image processing workflow (in the following denoted first image-processing workflow) may be part of a second image processing workflow (620 in Fig. 6). For example, the second image processing workflow may be similar to the first image processing workflow and includes the trained machine-learning model as one of the processing steps. The same compression process may now be applied on the second image processing workflow as well. For example, as further shown in Fig. 1b, the method may comprise, after replacing the image processing workflow with the machine-learning model, generating 180, using the second image processing workflow, a second plurality of outputs based on a second plurality of images. For example, the second plurality of images may correspond to the plurality of images. Alternatively, the second plurality of images may be newly obtained images that are based on newly obtained imaging sensor data of the optical imaging sensor. The second plurality of images may be provided 185 as training input images and the second plurality of outputs as training outputs for training a second machine-learning model (660 in Fig. 6), e.g., according to the method of Figs. 2a and/or 2b. Similar to the first image processing workflow, a feedback signal may be obtained to control the (input) parameter(s) of the second image processing workflow. After the training process, which may be implemented similar to the training of the first machine-learning model, the trained second machine-learning model may be obtained and used to replace the second image processing workflow. This process may be repeated, e.g., if the second image processing workflow is part of another, larger third image processing workflow.

More details and aspects of the method for the scientific or surgical imaging system are mentioned in connection with the proposed concept or one or more examples described above or below (e.g., Fig. 2a to 7). The method for the scientific or surgical imaging system may comprise one or more additional optional features corresponding to one or more aspects of the proposed concept, or one or more examples described above or below.

Figs. 2a and 2b show flow charts of example of a method for training a machine-learning model for use in a scientific or surgical imaging system. For example, the method of Figs. 2a and/or 2b may be used to train the machine-learning model introduced in connection with Figs. 1a and/or 1b using the training corpus generated using the method of Figs. 1a and/or 1b. The method comprises obtaining 210 a plurality of images of a scientific or surgical imaging system, for use as training input images. The method comprises obtaining 220 a plurality of training outputs that are based on the plurality of training input images and that are based on an image processing workflow of the scientific or surgical imaging system. The image processing workflow comprises a plurality of image processing steps. The method comprises training 240 the machine-learning model using the plurality of training input images and the plurality of training outputs. For example, the method may be performed by a computer system, e.g., by the system 310 introduced in connection with Fig. 3 or by the computer system 720 introduced in connection with Fig. 7. For example, the method may be performed by a cloud-based computer system.

As outlined in connection with Figs. 1a, two tasks are to be performed as part of the proposed concept - building a training corpus, and the actual training of the machine-learning model. While the former has been discussed in connection with Figs. 1a and/or 1b, the latter is now discussed with reference to Figs. 2a and/or 2b (a more detailed example of such a training is given in connection with Fig. 5). These two tasks are linked - the training corpus is generated for the purpose of training the machine-learning model, and the machine-learning model is trained using the corpus.

The method starts by obtaining the training corpus, i.e., by obtaining 210 the training input images and by obtaining 220 the plurality of training outputs. In addition, the method may comprise obtaining 230 one or more input parameters of the image processing workflow as further training input (with the machine-learning model being trained using the one or more input parameters as further training input). These components of the training corpus have been described in connection with Figs. 1a and/or 1b. They may be obtained from the (computer) system of the scientific or surgical imaging system, e.g.,

by receiving the training corpus from the system, by reading the training corpus from a flash drive originating from the system, or by executing the method of Figs. 2a and/or 2b on the system of the scientific or surgical imaging system.

Once the training corpus is available, it can be used to train the machine-learning model. In the following, a short introduction on machine learning is given, with a focus on the training of the machine-learning model.

Machine learning refers to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number (i.e., a training corpus) of training images and/or training sequences (e.g., words or sentences) and associated training content information (e.g., labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

In the present case, the machine-learning model is trained to imitate the image processing workflow, which accepts images at its input, and which generates outputs based on the images input into the image processing workflow. Accordingly, the machine-learning model is trained to transform an image (or images, if multiple images are input at the same time, which may be the case if multi-spectral imaging or concurrent fluorescence and white-light imaging are used) of the scientific or surgical imaging system into an output. For example, the machine-learning model may be trained to output, based on an image (or images) of the scientific or surgical imaging system, at least one of an image, a vector, spatial coordinates, and temporal coordinates, which have been described as potential outputs of the image processing workflow, and thus also the resulting machine-learning model, in connection with Figs. 1a and/or 1b.

Machine-learning models are trained using training input data. The image classification examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Supervised learning may also be applied to the presently-trained machine-learning model. For example, the machine-learning model may be trained, using supervised learning, to transform an image of the scientific or surgical imaging system into an output, by applying the plurality of training input images at an input of the machine-learning model (as training samples) and using the plurality of training outputs as desired output (as desired output values) during training of the machine-learning model. For example, a suitable loss function, such as gradient descent, may be chosen, so that the machine-learning model gradually learns to provide the "correct" (or at least similar) output when fed an image of the scientific or surgical imaging system. For example, the loss function may be a loss function for reducing, for a given training input image, a difference between the output provided by the machine-learning model and the training output corresponding to the training input image. For example, if the machine-learning model is trained to output an image, a per-pixel loss function may be used, or a perceptual loss function may be used (which is based on the mean sum square of the errors between all of the pixels, instead of the absolute errors between the pixels).

Supervised learning may be based on a supervised learning algorithm (e.g., a classification algorithm, a regression algorithm or a similarity learning algorithm. Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised learning, semi-supervised learning may be used. In semi-supervised learning, some of the training samples lack a corresponding desired output value.

Apart from supervised or semi-supervised learning, unsupervised learning may be used to train the machine-learning model. In unsupervised learning, (only) input data might be supplied, and an unsupervised learning algorithm may be used to find structure in the input data (e.g., by grouping or clustering the input data, finding commonalities in the data). Clustering is the assignment of input data comprising a plurality of input values into subsets (clusters) so that input values within the same cluster are similar according to one or more (predefined) similarity criteria, while being dissimilar to input values that are included in other clusters.

An unsupervised learning technique that is suitable for training the machine-learning model at hand is the use of a generative adversarial network (GAN). In adversarial training, a generator model is trained to generate a candidate, which is evaluated by a discriminator model. Both the generator model and the discriminator model are trained together, leading to steady improvements in the quality of the candidate generated by the generator model (and the quality of the evaluation performed by the discriminator model). In the present concept, the machine-learning model may be trained, as generator model of a pair of generative adversarial networks (a specific implementation of adversarial learning) to transform an image of the scientific or surgical imaging system into an output. The discriminator model of the pair of generative adversarial networks is used to evaluate the output of the scientific or surgical imaging system, e.g., by outputting a binary pass / fail evaluation of the generated output, or by grading the output of the scientific or surgical imaging system on a scale. To perform said evaluation, the discriminator model may be trained based on the plurality of training outputs, e.g., to enable the discriminator model to distinguish between "good" and "bad" (or "passing" and "failing") outputs. For this purpose, supervised learning may be used. For example, the discriminator model may be trained to output, based on a training input image and a training output (which is, for example, either the corresponding training output, an output generated by the generator model based on the training input image, or a randomly distorted version of the corresponding training output), a binary value indicating whether the output being input into the discriminator corresponds to the "real" corresponding output. As desired output value of the supervised learning-based training of the discriminator, a corresponding binary value indicating whether the output being input into the discriminator corresponds to the "real" corresponding output may be used.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

In the present context, the machine-learning model may be trained, using reinforcement learning, to transform an image of the scientific or surgical imaging system into an output. In this case, the training output may be used to determine the reward of the respective transformation. In particular, a difference between the output of the machine-learning model during training and a training output of the plurality of training outputs may be used to determine a reward during the reinforcement learning-based training. Similar to the aforementioned per-pixel and perceptual loss, the reward may be calculated based on the per-pixel difference between the output of the machine-learning model during training and the training output or based on a mean of the difference over all of the pixels.

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input.

In particular, the machine-learning model being trained in the present concept may be an ANN-based machine-learning model, and in particular a Deep Neural Network (DNN), i.e., a neural network having an input layer (comprising input nodes), an output layer (comprising output nodes), and one or more hidden layers (comprising hidden nodes) between the input and output layer. For example, different types of DNNs may be used to implement the machine-learning model, such as an MLP (Multi-Layer Perceptron), a CNN (Convolutional Neural Network), a RNN (Recurrent Neural Network), or a Transformer (a neural network mainly based on attention mechanism).

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As outlined in connection with Figs. 1a and/or 1b, a feedback path may be introduced between the training of the machine-learning model and the image-processing workflow, to improve the selection of parameters of the various steps of the image-processing workflow. This may either be done by evaluating the output of the machine-learning model during training (e.g., with respect to a quality criterion), or by training the machine-learning model to not only provide the output, but also the feedback signal. Accordingly, as further shown in Fig. 2b, the method may comprise evaluating 250 an output of the machine-learning model according to a quality criterion. The method may comprise providing 255 a feedback signal (580 in Fig. 5) for adapting one or more parameters of the image processing workflow based on the evaluation of the output of the machine-learning model. For example, the quality criterion may relate to at least one of a brightness, a contrast, a presence of high spatial frequencies, a size of bounding boxes, a delineation between the regions of interest and other regions etc. The image output by the machine-learning model may be compared to a desired brightness, contrast, presence of high spatial frequencies, size of bounding boxes etc. during evaluation of the output of the machine-learning model. A rulebook comprising a matching between differences between the brightness and the desired brightness, contrast, and desired contrast etc. and corresponding parameters of the image-processing workflow may be used to generate the feedback signal.

Alternatively, the machine-learning model may be trained to generate the feedback signal. In other words, the machine-learning model may be trained to generate the feedback signal 580 for adapting one or more parameters of the image processing workflow. More details on such training are given in connection with Fig. 5. In short, in addition to a loss function or reward function for the transformation between the image and the output, an additional loss function or reward function may be defined, such that an improved training corpus is produced which leads to a better performance of the trained machine-learning model. In addition, the machine-learning model is trained with additional inputs for at least some parameters of the image-processing workflow (e.g., for a vector representing the parameters or for an embedding of the parameters), and with one or more additional outputs for the feedback signal. For example, the machine-learning model may then be trained with a loss function or reward function comprising a weighted linear combination of losses/reward for improving the image-to-image (or image-to-output) loss/reward and suitable losses/rewards for the feedback signal, including mean squared error (i.e. L2 norm), mean absolute error (i.e. L1 Norm) or a classification loss such as binary cross-entropy depending on the respective parameter. Thus, the machine-learning model may have two outputs which predict, both, a desired output as well as the parameter set for the image processing workflow. As a result, a new parameter set can be predicted on a previously unseen input image, which may also be used during usage of the machine-learning model. In other words, the feedback signal may be used recurrently, by feeding the feedback signal from an output of the machine-learning model back to an input of the machine-learning model.

More details and aspects of the method for training the machine-learning model are mentioned in connection with the proposed concept or one or more examples described above or below (e.g., Fig. 1a to 1b, 3 to 7). The method for training the machine-learning model may comprise one or more additional optional features corresponding to one or more aspects of the proposed concept, or one or more examples described above or below.

Fig. 3 shows a schematic diagram of an example of a system 310 for a scientific or surgical imaging system 300. Fig. 3 further shows of a scientific or surgical imaging system 300 comprising such a system 310 and a scientific or surgical imaging device 320.

As outlined in connection with Figs. 1a and 1b, the proposed concept relates to a scientific or surgical imaging system, which is a system comprising both optical and imaging components (i.e., the scientific or surgical imaging device, such as a microscope, an endoscope or an exoscope) and a (computer) system that is being used to control various aspects of the scientific or surgical imaging system (such as illumination, a robotic arm, a motorized sample stage etc.), but that is also used for performing image processing on the imaging sensor data provided by the scientific or surgical imaging device.

Fig. 3 shows an example of such a system 310 that is suitable for performing such tasks. The system 310 comprises one or more processors 314 and one or more storage devices 316. Optionally, the system 310 further comprises one or more interfaces 312. The one or more processors 314 are coupled to the one or more storage devices 316 and to the one or more interfaces 312. In general, the functionality of the system 310 may be provided by the one or more processors 314, in conjunction with the one or more interfaces 312 (for exchanging data/information with one or more other components of the scientific or surgical imaging system 300 and outside the scientific or surgical imaging system 300, such as one or more optical imaging sensors of the scientific or surgical imaging device 320, another system (e.g., a cloud-based system), or a display device of the scientific or surgical imaging system), and with the one or more storage devices 316 (for storing information, such as machine-readable instructions of a computer program being executed by the one or more processors). In general, the functionality of the one or more processors 314 may be implemented by the one or more processors 314 executing machine-readable instructions. Accordingly, any feature ascribed to the one or more processors 314 may be defined by one or more instructions of a plurality of machine-readable instructions. The system 310 may comprise the machine-readable instructions, e.g., within the one or more storage devices 316.

Such a system may be used to perform various tasks. For example, the system may be configured to perform the method shown in connection with Figs. 1a and/or 1b. Alternatively, or additionally, the system may be configured to perform the method shown in connection with Figs. 1a and/or 1b.

In some examples, such a system may be a system that is unable to perform the image processing workflow described in connection with Figs. 1a and/or 1b (at least in real-time), e.g., an embedded system or a mobile system that is temporarily coupled to the scientific or surgical imaging device. While such a system is unable to perform the uncompressed image processing workflow, it may be suitable for processing the images using the trained machine-learning model. Thus, instead of performing any of the methods of Figs. 1a and/or 1b, the system 310 may be configured to obtain an image (or stream of images) based on imaging sensor data of the optical imaging sensor of the scientific or surgical imaging system 300. The system may be configured to process the image using a machine-learning model that is trained according to the method of Figs. 2a and/or 2b. The system may be configured to use an output of the machine-learning model. For example, such a system 310 may be an embedded system for use as part of the scientific or surgical imaging system 300. Alternatively, such a system 310 may be a mobile device that may be suitable for being coupled with the scientific or surgical imaging system 300. Some examples relate to a corresponding method and computer program for performing the tasks being performed by the system 310.

For example, in some examples, multiple systems 310 may be used, e.g., a first for performing the method of Figs. 1a and/or 1b, a second for performing the method of Figs. 1a and/or 1b, and an optional third for using the machine-learning model to process the image data, or a first for performing the methods of Figs. 1a-2b and a second for using the machine-learning model to process the image data.

In the proposed scientific or surgical imaging system, at least one optical imaging sensor may be used to provide the aforementioned imaging sensor data. Accordingly, the optical imaging sensor, which may be part of the proposed scientific or surgical imaging device 320 (e.g., of the microscope) may be configured to generate the imaging sensor data. For example, the at least one optical imaging sensor of the proposed scientific or surgical imaging device 320 may comprise or be an APS (Active Pixel Sensor) - or a CCD (Charge-Coupled-Device)-based imaging sensor. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensors by a circuitry of the imaging sensors to perform the imaging. The system 310 may be configured to obtain (i.e., receive or read out) the imaging sensor data from the optical imaging sensor. The imaging sensor data may be obtained by receiving the imaging sensor data from the optical imaging sensor (e.g., via the interface 312), by reading the imaging sensor data out from a memory of the optical imaging sensor (e.g., via the interface 312), or by reading the imaging sensor data from a storage device 316 of the system 310, e.g., after the imaging sensor data has been written to the storage device 316 by the optical imaging sensor or by another system or processor.

The one or more interfaces 312 of the system 310 may correspond to one or more inputs and/or outputs for receiving and/or transmitting information, which may be in digital (bit) values according to a specified code, within a module, between modules or between modules of different entities. For example, the one or more interfaces 312 may comprise interface circuitry configured to receive and/or transmit information. The one or more processors 314 of the system 310 may be implemented using one or more processing units, one or more processing devices, any means for processing, such as a processor, a computer or a programmable hardware component being operable with accordingly adapted software. In other words, the described function of the one or more processors 314 may as well be implemented in software, which is then executed on one or more programmable hardware components. Such hardware components may comprise a general-purpose processor, a Digital Signal Processor (DSP), a micro-controller, etc. The one or more storage devices 316 of the system 310 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the system and of the scientific or surgical imaging system are mentioned in connection with the proposed concept or one or more examples described above or below (e.g., Fig. 1a to 2b, 3 to 7). The system and of the scientific or surgical imaging system may comprise one or more additional optional features corresponding to one or more aspects of the proposed concept, or one or more examples described above or below.

Various examples of the present disclosure relate to a concept, in the following also denoted "DEEPRESSO" for compressing image analysis workflows with arbitrary steps into a deep neural network.

The proposed concept focuses on facilitating image analysis of images created by microscopes or other biomedical imaging devices. Various examples involve running image analysis workflows as part of an analysis software on a computer, an embedded device or in the cloud. Any of these can be attached to a microscope currently acquiring images.

Various aspects of the proposed concept relates to a system which allows to use the output of an image analysis workflow (Fig. 4, 400) comprising multiple processing or analysis steps $s_j$ for creating a training set to train a DNN, such that the DNN can be trained end-to-end and replace the workflow. During training, the DNN receives the input image of the workflow as input and the output of the workflow as a target to recreate. The DNN thus learns a mapping from input image to output and can thereafter replace the entire workflow.

The purpose of doing the above is to replace a complicated image analysis workflow by a deep neural network (DNN) which produces the output in a single step. This replacement also gets referred to as compression of the workflow. Consequently, the application of image analysis might require only a single step after compression. This allows to deploy complex image analysis to devices with limited resources (such as mobile or embedded systems). In addition, reduced storage may be required (in case multiple deep neural networks are part of the image analysis workflow). In short, a deep neural network may be trained on the output of an image analysis workflow which may comprise zero to multiple steps involving deep neural networks of arbitrary size (compared to the target neural network) applied sequentially to an input image.

Fig. 4 shows a schematic overview of an example of an image analysis workflow 400 comprising multiple different steps 420-425 of image processing and / or analysis. Images 410 are passed through the workflow and new images may be computed at each step until a final image 430 is output by the workflow. Alternatively, or additionally, the output may also represent a vector 433 or points in the image domain 435 such as bounding boxes or combinations thereof. For example, the workflow was created by a user 450 who can configure each step of the workflow or modify an existing one.

Image analysis can comprise multiple tasks (Fig. 4, 420-425), such as image classification (mapping an image to a vector), object detection (classification and box regression to object location), semantic segmentation (pixel classification), instance segmentation (pixel classification and numbering of object instances). Sometimes a single algorithm may be enough to fulfill a complex task. In some cases, however, the combination of multiple steps may be used. These steps can involve preprocessing steps, such as denoising, filtering certain frequencies, transformation into Fourier space and back, applying physical models or passing images through a trained DNN

Ultimately, regardless of the details of each step $s_j$, an input image $I$ (Fig. 4, 410) is converted to an output O, which can be an image 430, a vector 433, spatial or temporal coordinates 455 (points in the same space as the image), text or combinations thereof (Fig. 4, 430-335). These steps may involve a long computation time as well as iterative steps, which do not lend such a process to fast or even real-time computation.

Fig. 5 shows a schematic overview of an example of a workflow for training a deep neural network. In various examples, a computer, such as the system 310 introduced in connection with Fig. 3 or the computer system 720 of Fig. 7, is configured to run an (existing) image analysis workflow

$$\mathcal{W}_1$$

(Fig. 5, 500) and has access to a repository with a plurality of input images (Fig. 5, 510), which may correspond to the plurality of images of the scientific or surgical imaging system, i.e., the training input images, discussed in connection with Figs. 1a to 2b. Optionally, the workflow

$$\mathcal{W}_1$$

can be a nested workflow where one step in

$$\mathcal{W}_1$$

can consist of multiple steps $s_j$ or recursively multiple workflows itself. For each image $I_i$ from the repository, an output $O_i$ is computed (Fig. 5, 520), which may correspond to the outputs of the plurality of outputs, i.e., the training outputs, discussed in connection with Figs. 1a to 2b. The output in turn may be kept in Random Access Memory (RAM) (Fig. 5, 540), cached, or written to a repository (Fig. 5, 530). Thus, a training corpus (or training set) is generated (Fig. 5, 560) for training 570 new DNN $\mathcal{D}$ (Fig. 5, 550), which has not been part of the workflow

$$\mathcal{W}_1$$

previously. For example, the training corpus, or training set, comprises tuples of input data (i.e., the training input images) and output data (i.e., the training outputs) which was produced by the workflow. The training results in a DNN $\mathcal{D}'$ (Fig. 5, 555), i.e., the trained machine-learning model, which may be used in the method of Figs. 1a to 1b and trained by the method of Fig. 2a to 2b, which is competent to replace the workflow.

In general, the training of DNN $\mathcal{D}$ can occur "offline" in the sense that the training corpus gets built first and the training of D occurs strictly afterwards. Alternatively, training of DNN $\mathcal{D}$ can occur "online" in the sense that $D$ gets trained iteratively with

$$\mathcal{W}_1$$

producing pairs of (input, output) images or batches thereof which the DNN gets trained on, then the next batch becomes available.

In a particular implementation of the "online" training, a feedback loop may be inserted between the DNN $\mathcal{D}'$ being trained and the workflow

$$\mathcal{W}_1.$$

Thus, training 570 and generating training data 560 can run in parallel with a feedback loop. This feedback loop may relate to parameters $\mathcal{H}_i$ of the workflow steps $s_j$ of workflow

$$\mathcal{W}_1,$$

i.e., the parameters of the steps of the workflow may be adapted according to the feedback loop. The feedback loop may use a loss function $\mathcal{L}$ and/or other metrics $\mathcal{M}$ (Fig. 5, 580) to reconfigure the parameters $\mathcal{H}_i$ of one or more steps (Fig. 5, 590) in the workflow (thus providing a feedback signal) such that improved or optimal training data is produced which leads to a better performance of the trained DNN. In other words, the creation of the training set can be improved to result in a trained model with higher performance.

On the other hand, these parameters may also be considered by the DNN $\mathcal{D}$ being trained. During training, the input to DNN $\mathcal{D}$ might not only include the image $I_i$, but also some or all the parameters $\mathcal{H}_i$ used to parameterize each step $s_j$ of workflow

$$\mathcal{W}_1.$$

These parameters can be input into $\mathcal{D}$ individually or as concatenated vectors or as dense vector representations (embeddings). DNN D would in this case have a second input node (in addition to the image input) which can be passed through an arbitrary number of computational steps including a sub-network of the whole DNN $\mathcal{D}$ to process, refine or resize the parameter input to produce computed activations $a_i$. These activations can then be combined, such as added to or concatenated with the computed activations $b_i$ from the image input of DNN $\mathcal{D}$.

During training of DNN $\mathcal{D}$ with input image $I_i$ the desired output can be both, output image O and parameter set $\mathcal{H}_i$ (to be used for the feedback loop). The model may then be trained with a loss function comprising a weighted linear combination of losses for improving the image-to-image loss and suitable losses for $\mathcal{H}_i$, including mean squared error (i.e. L2 norm), mean absolute error (i.e. L1 Norm) or a classification loss such as binary cross-entropy depending on the parameter in $\mathcal{H}_i$. Thus, the model $\mathcal{D}$ may have two outputs which predict, both, a desired output image as well as the parameter set $\mathcal{H}_i$ for workflow

$$\mathcal{W}_1$$

which leads to $O_i$. As a result, a new parameter set $\mathcal{H}_i{'}$ can be predicted on a previously unseen input image, which may also be used during usage of DNN $\mathcal{D}$. The output of the trained model can then be compared to the output of the workflow

$$\mathcal{W}_1$$

parameterized with $\mathcal{H}_i{'}$. This can help in cases where generalization is poor, or to help with interpreting the result $O_i$ obtained from $\mathcal{D}$.

In a particular example, the trained DNN D' can be part of workflow

$$\mathcal{W}_1$$

and its parameters can get iteratively improved during training, thus the workflow becomes autoregressive in the sense that both, the outcomes $O_i$ and the trained DNN improve in parallel.

Effectively, workflow

$$\mathcal{W}_1$$

comprising multiple processing or analysis steps gets compressed into a single step realized by a DNN. During training, the DNN receives the input image of the workflow as input and the output of the workflow as a target to recreate. The DNN thus learns a mapping from input image to output and can thereafter replace the entire workflow.

In general, the trained DNN D' can be loaded on a mobile device or an embedded system where it executes faster than the original workflow it compresses. The mobile or embedded devices can be attached to a microscope or biomedical imaging system. Alternatively, or additionally, a microscope or biomedical imaging system may perform image acquisition in parallel to the image analysis. In this case, the plurality of input images (Fig. 4 410) may be taken from the microscope.

The process of repeatedly creating a training set using a workflow, training a new model which compresses that workflow and extending that new workflow is shown in Fig. 6. Using this process, the newly trained DNN $\mathcal{D}'$ can become part of a new workflow

$$\mathcal{W}_2,$$

which in turn can be nested.

$$\mathcal{W}_2$$

can later be compressed into another DNN $\mathcal{D}_2$. Fig. 6 shows a schematic overview of an example of a first compression workflow 600 for compressing an image analysis workflow that is similar to the one seen in Fig. 5. The training set generated with workflow

$$\mathcal{W}_1.$$

results in a trained DNN $\mathcal{D}'$ capable of producing an output $O'_i$ similar to output $O_i$ produced by

$$\mathcal{W}_1$$

given input $I_i$. The trained trained DNN $\mathcal{D}'$ can be one step 630 of a new image analysis workflow

$$\mathcal{W}_2$$

620 comprising the trained DNN $\mathcal{D}'$ which produces output $O'_i$ given input $I_i$. Optionally, a user 633, a machine learning model running on a computer or embedded system 636 or a machine learning model running in a cloud 639 can add, configure, or modify further image analysis steps 640, 645 in

$$\mathcal{W}_2.$$

This extended workflow

$$\mathcal{W}_2$$

can then be compressed again, using a second compression workflow 610, into a newly trained DNN $\mathcal{D}''$ by creating a new training set ($I'_i$; $O'_i$). The input images $I'_i$ of this new training set can be the same or different from the original input $I_i$. The newly trained DNN $\mathcal{D}''$ can be trained using stochastically initialized model parameters $\Theta_i$ or load those of $\mathcal{D}'$ as a starting point. $\mathcal{D}''$ can become a step 660 in a new workflow

$$\mathcal{W}_3$$

650 and the process of creating new training sets, compressing a workflow into a new, shorter one, modifying that workflow can be repeated as many times as necessary.

Optionally, each round (e.g., Fig. 6, 600, 610, 620) can have a feedback loop to reconfigure individual steps in the workflow creating the training set and / or each workflow's individual steps can be reconfigured by a user (Fig. 6 633) or automatically by a machine learning model independently trained running on a local machine (Fig. 6 636) or in the cloud (Fig. 6 639).

In the present concept, various acronyms and terms are used, which are shortly summarized in the following. A DNN is a deep neural network, which can involve any algorithm, such as MLP (Multi-Layer Perceptron), CNN (Convolutional Neural Network), RNN (Recurrent Neural Network), or Transformer (a neural network mainly based on attention mechanism). A target neural network is a deep neural network being trained using the output of a complex image analysis workflow as described in the present concept. An image is a digital image, for example with dimensions XY (i.e., two lateral dimensions X and Y), XYZ (i.e., a depth-dimension Z in addition to the two lateral dimensions X+Y), XY+T (XY + Time), XYZ+C (XYZ + Channel), XYZ+T (XYZ + Time), XYZCT (XYZ + Channel + Time), XYZCT+other modalities. In other words, a 2D or nD digital image (tensor) with n GN. A (image processing) workflow refers to the sequential execution of multiple image processing or image analysis steps where the output of the i-th step is passed to the input of the (i+1)th step. In the present concept, compressing (of the workflow) refers to replacing a complex image analysis workflow comprising multiple steps by a single neural network which learned to produce the output of that same workflow.

More details and aspects of the DEEPRESSO concept are mentioned in connection with the proposed concept or one or more examples described above or below (e.g., Fig. 1a to 3, 7). The DEEPRESSO concept may comprise one or more additional optional features corresponding to one or more aspects of the proposed concept, or one or more examples described above or below.

Some embodiments relate to an imaging device, and in particular a scientific or surgical imaging device, such as a microscope, an exoscope or an endoscope, comprising a system as described in connection with one or more of the Figs. 1a to 6. Alternatively, an imaging device may be part of or connected to a system as described in connection with one or more of the Figs. 1a to 6. Fig. 7 shows a schematic illustration of a system 700 configured to perform a method described herein. The system 700 comprises an imaging device 710, and in particular a scientific or surgical imaging device, such as a microscope, an exoscope or an endoscope, and a computer system 720. The imaging device 710 is configured to take images and is connected to the computer system 720. The computer system 720 is configured to execute at least a part of a method described herein. The computer system 720 may be configured to execute a machine learning algorithm. The computer system 720 and imaging device 710 may be separate entities but can also be integrated together in one common housing. The computer system 720 may be part of a central processing system of the imaging device 710 and/or the computer system 720 may be part of a subcomponent of the imaging device 710, such as a sensor, an actor, a camera, or an illumination unit, etc. of the imaging device 710.

The computer system 720 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 720 may comprise any circuit or combination of circuits. In one embodiment, the computer system 720 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 720 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 720 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 720 may also include a display device, one or more speakers, and a keyboard and/or controller, which can include a mouse, trackball, touch screen, voice-recognition device, or any other device that permits a system user to input information into and receive information from the computer system 720.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate, or apply the knowledge.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of reference numerals

| | |
|---|---|
| 110 | Generating a plurality of images |
| 120 | Generating a plurality of outputs |
| 130 | Providing the plurality of images and plurality of outputs as training input images and training outputs for training a machine-learning model |
| 135 | Providing one or more input parameters as further training input |
| 140 | Obtaining a feedback signal |
| 145 | Using the feedback signal as input |
| 150 | Regenerating the plurality of outputs |
| 155 | Providing the regenerated outputs as training outputs |
| 160 | Obtaining the trained machine-learning model |
| 170 | Replacing an image processing workflow with the trained machine-learning model |
| 180 | Generating a second plurality of outputs |
| 185 | Providing a second plurality of images and the second plurality of outputs as training input images and training outputs for training a second machine-learning model |
| 210 | Obtaining a plurality of images |
| 220 | Obtaining a plurality of training outputs |
| 230 | Obtaining one or more input parameters |
| 240 | Training a machine-learning model |
| 250 | Evaluating an output |
| 255 | Providing a feedback signal |
| 300 | Scientific or surgical imaging system |
| 310 | System |
| 312 | Interface |
| 314 | Processor |
| 316 | Storage device |
| 320 | Scientific or surgical imaging device |
| 400 | Image processing workflow |
| 410 | Images |
| 420-425 | Steps of the workflow |
| 430 | Image |
| 433 | Vector |
| 435 | Points in the image domain |
| 450 | User |
| 500 | Workflow |
| 510 | Input images |
| 520 | Output |
| 530 | Permanent storage / repository |
| 540 | RAM |
| 550 | (Untrained) DNN |
| 555 | Trained DNN |
| 560 | Generating training corpus / training data |
| 570 | Training |
| 580 | Feedback loop |
| 590 | Parametrizable step |
| 600 | First compression workflow |
| 610 | Second compression workflow |
| 620 | Workflow |
| 630 | Step replaced by compressed workflow |
| 633 | User |
| 636 | Computer or embedded system |
| 639 | Cloud |
| 640, 645 | Further image analysis steps |
| 650 | Step replaced by compressed workflow |
| 660 | Workflow |
| 700 | System |
| 710 | Imaging device, microscope |
| 720 | Computer system |

## Claims

1. A method for training a machine-learning model for use in a scientific or surgical imaging system, the method comprising:

   obtaining (210) a plurality of images (410; 420) of a scientific or surgical imaging system, for use as training input images;
   obtaining (220) a plurality of training outputs (430-435, 520) that are based on the plurality of training input images and that are based on an image processing workflow of the scientific or surgical imaging system, the image processing workflow comprising a plurality of image processing steps; and
   training (240) the machine-learning model (450, 455) using the plurality of training input images and the plurality of training outputs.

2. The method according to claim 1, further comprising obtaining (230) one or more input parameters of the image processing workflow as further training input and training the machine-learning model using the one or more input parameters as further training input.

3. The method according to one of the claims 1 or 2, further comprising evaluating (250) an output of the machine-learning model according to a quality criterion and providing (255) a feedback signal (580) for adapting one or more parameters of the image processing workflow based on the evaluation of the output of the machine-learning model.

4. The method according to one of the claims 1 to 3, wherein the machine-learning model is trained to generate a feedback signal (580) for adapting one or more parameters of the image processing workflow.

5. The method according to one of the claims 1 to 4, wherein the machine-learning model is trained, using supervised learning, to transform an image of the scientific or surgical imaging system into an output, by applying the plurality of training input images at an input of the machine-learning model and using the plurality of training outputs as desired output during training of the machine-learning model.

6. The method according to one of the claims 1 to 5, wherein the machine-learning model is trained, using reinforcement learning, to transform an image of the scientific or surgical imaging system into an output, wherein a difference between the output of the machine-learning model during training and a training output of the plurality of training outputs is used to determine a reward during the reinforcement learning-based training.

7. The method according to one of the claims 1 to 6, wherein the machine-learning model is trained, as generator model of a pair of generative adversarial networks to transform an image of the scientific or surgical imaging system into an output, with a discriminator model of the pair of generative adversarial networks being trained based on the plurality of training outputs.

8. A method for a scientific or surgical imaging system (300), the method comprising:

   generating (110) a plurality of images (410; 510) based on imaging sensor data of an optical imaging sensor of the scientific or surgical imaging system;
   generating (120), using an image processing workflow (400; 500) of the scientific or surgical imaging system, a plurality of outputs (430-435, 520) based on the plurality of images, the image processing workflow comprising a plurality of image processing steps (420-425); and
   providing (130) the plurality of images as training input images and the plurality of outputs as training outputs for training a machine-learning model according to the method of one of the claims 1 to 7.

9. The method according to claim 8, further comprising obtaining (160) the trained machine-learning model (555) and replacing (170) the image processing workflow with the machine-learning model that is trained according to the method of one of the claims 1 to 7.

10. The method according to one of the claims 8 or 9, further comprising training the machine-learning model using the method of one of the claims 1 to 7.

11. The method according to one of the claims 8 to 10, further comprising obtaining (140) a feedback signal (580), the feedback signal being based on the training of the machine-learning model (555) or based on an output of the trained machine-learning model when the machine-learning model is used by the surgical or scientific imaging system, and using (145) the feedback signal as input to the image processing workflow or to the trained machine-learning model.

12. The method according to one of the claims 8 to 11, wherein the image processing workflow comprises at least one of one or more deterministic image processing steps, one or more image processing steps with an iterative optimization component, and one or more machine-learning-based image processing steps.

**13.** A system (310) for a scientific or surgical imaging system (300), the system comprising one or more processors (314) and one or more storage devices (316), wherein the system is configured to perform at least one of the method of one of the claims 1 to 7 and the method of one of the claims 8 to 12.

**14.** A system (310) for a scientific or surgical imaging system (300), the system comprising one or more processors (314) and one or more storage devices (316), wherein the system is configured to

Obtain an image based on imaging sensor data of an optical imaging sensor of the scientific or surgical imaging system;
Process the image using a machine-learning model that is trained according to the method of one of the claims 1 to 7; and
Use an output of the machine-learning model.

**15.** A computer program with a program code for performing the method according to one of the claims 1 to 7 or the method according to one of the claims 8 to 12 when the computer program is run on a processor.

110

120

130

**Fig. 1a**

110

120

130

135

140

145

150

155

160

170

180

185

**Fig. 1b**

210

220

240

**Fig. 2a**

210

220

230

240

250

255

**Fig. 2b**

320

312

314

312

310

300

**Fig. 3**

435

430

433

0.002
-0.162
0.563
0.087
...
-0.002
0.143
0.128
0.011

425

450

421

420

400

410

Fig. 4

**Fig. 5**

EP 4 386 626 A1

**Fig. 6**

Fig. 7

Europäisches
Patentamt

European
Patent Office

Office européen
des brevets

# EUROPEAN SEARCH REPORT

Application Number

EP 22 21 3531

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAI SEK ET AL: "Bootstrapping Deep Neural Networks from Approximate Image Processing Pipelines", 2019 2ND WORKSHOP ON ENERGY EFFICIENT MACHINE LEARNING AND COGNITIVE COMPUTING FOR EMBEDDED APPLICATIONS (EMC2), IEEE, 17 February 2019 (2019-02-17), pages 6-10, XP033731887, DOI: 10.1109/EMC249363.2019.00009 [retrieved on 2020-03-06] * page 6 – page 10, left-hand column, paragraph 3 * | 1-15 | INV. G06N3/0455 G06N3/0464 G06N3/0475 |
| A | ELI SCHWARTZ ET AL: "DeepISP: Learning End-to-End Image Processing Pipeline", ARXIV.ORG, CORNELL UNIVERSITY LIBRARY, 201 OLIN LIBRARY CORNELL UNIVERSITY ITHACA, NY 14853, 3 February 2019 (2019-02-03), XP081405848, DOI: 10.1109/TIP.2018.2872858 * the whole document * | 1-15 | |
| A | GARCIA SANTA CRUZ BEATRIZ ET AL: "Generalising from conventional pipelines using deep learning in high-throughput screening workflows", SCIENTIFIC REPORTS, vol. 12, no. 1, 6 July 2022 (2022-07-06), XP093048409, DOI: 10.1038/s41598-022-15623-7 * the whole document * | 1-15 | **TECHNICAL FIELDS SEARCHED (IPC)** G06N |

-/--

The present search report has been drawn up for all claims

| Place of search | Date of completion of the search | Examiner |
|---|---|---|
| The Hague | 24 May 2023 | Volkmer, Markus |

EPO FORM 1503 03.82 (P04C01)

Europäisches
Patentamt

European
Patent Office

Office européen
des brevets

# EUROPEAN SEARCH REPORT

Application Number

**EP 22 21 3531**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Jianxu Chen ET AL: "The Allen Cell Structure Segmenter: a new open source toolkit for segmenting 3D intracellular structures in fluorescence microscopy images", bioRxiv, 8 December 2018 (2018-12-08), XP055630983, DOI: 10.1101/491035 Retrieved from the Internet: URL:https://www.biorxiv.org/content/biorxiv/early/2018/12/08/491035.full.pdf [retrieved on 2019-10-11] * the whole document * | 1-15 | |
| A | US 2018/336677 A1 (SLOAN JAMES [GB] ET AL) 22 November 2018 (2018-11-22) * the whole document * | 1-15 | |
| A | US 2019/325304 A1 (GOTTIN VINÍCIUS MICHEL [BR] ET AL) 24 October 2019 (2019-10-24) * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 24 May 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 386 626 A1

## ANNEX TO THE EUROPEAN SEARCH REPORT
## ON EUROPEAN PATENT APPLICATION NO.

EP 22 21 3531

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2023

| Patent document cited in search report | | Publication date | Patent family member(s) | | Publication date |
|---|---|---|---|---|---|
| US 2018336677 | A1 | 22-11-2018 | JP | 7246866 B2 | 28-03-2023 |
| | | | JP | 2018192264 A | 06-12-2018 |
| | | | US | 2018336677 A1 | 22-11-2018 |
| US 2019325304 | A1 | 24-10-2019 | NONE | | |

EPO FORM P0459

For more details about this annex : see Official Journal of the European Patent Office, No. 12/82